(19) Europäisches Patentamt / European Patent Office / Office européen des brevets

(11) **EP 1 972 803 A1**

(12) **EUROPEAN PATENT APPLICATION**

(43) Date of publication:
**24.09.2008 Bulletin 2008/39**

(51) Int Cl.:
*F16C 19/46* (2006.01)      *F16C 33/58* (2006.01)
*F16C 33/60* (2006.01)      *F16C 33/64* (2006.01)

(21) Application number: **08004960.4**

(22) Date of filing: **17.03.2008**

(84) Designated Contracting States:
**AT BE BG CH CY CZ DE DK EE ES FI FR GB GR HR HU IE IS IT LI LT LU LV MC MT NL NO PL PT RO SE SI SK TR**
Designated Extension States:
**AL BA MK RS**

(30) Priority: **20.03.2007 JP 2007073333**

(71) Applicant: **JTEKT CORPORATION**
**Chuo-ku**
**Osaka-shi**
**Osaka 542-8502 (JP)**

(72) Inventor: **Waseda, Yoshitaka**
**Osaka-shi**
**Osaka 542-8502 (JP)**

(74) Representative: **Görz, Ingo**
**Hoefer & Partner**
**Patentanwälte**
**Pilgersheimer Strasse 20**
**81543 München (DE)**

(54) **Roller bearing and outer ring manufacturing method**

(57)    A step portion (2b,3b) is formed at an outer peripheral surface of an axially-central portion of an outer ring (2,3), and is smaller in diameter than outer peripheral surfaces of axial opposite end portions (2c,3c) of the outer ring (2,3). The step portion (2b,3b) is continuously formed over an entire periphery of the outer ring (2,3), and has a predetermined width (W3) over the entire periphery. The outer peripheral surface and inner peripheral surface of the outer ring (2,3) are pressed radially inwardly, and therefore are bulged radially inwardly into a step-like shape to form the step portion (2b,3b) having an axis coinciding with an axis of the outer ring (2,3). A pedestal of a cylinder block and a cap member retain the outer peripheral surface of the step portion (2b,3b), thereby positioning the outer ring (2,3) in the axial direction and also preventing a movement of the outer ring in the axial direction.

*FIG. 2*

**Description**

BACKGROUND OF THE INVENTION

This invention relates to a roller bearing, and more particularly to a roller bearing suited for supporting a rotation shaft such as a camshaft and a crankshaft disposed in a housing of an engine, and further relates to an outer ring manufacturing method.

Recently, roller bearings such as needle roller bearings are usually used for supporting a rotation shaft (such as a camshaft and a crankshaft) disposed in a housing (e.g. a cylinder block and a cylinder head) of an engine. In such a case, when an outer peripheral surface of the rotation shaft is used directly as a raceway surface, the use of an inner ring can be omitted, and particularly in the case of the needle roller bearing, a small-diameter design (a small-size design) can be easily achieved while maintaining a loading capacity. However, such a roller bearing in which the use of the inner ring is omitted is not provided with fixing means for the rotation shaft, and therefore it is necessary to provide separate means for positioning an outer ring in an axial direction and for preventing an axial movement of the outer ring relative to the rotation shaft or the housing.

Therefore, there has been proposed a technique in which projections formed on the outer peripheral surface of the outer ring are fitted in respective recesses formed in the housing side (a housing body or a cap member), thereby positioning the outer ring in the axial direction and also preventing the axial movement of the outer ring (see, for example, JP-A-2005-180459).

In JP-A-2005-180459, the positioning of the outer ring in the axial direction can be effected by the engagement of the projections with the respective recesses. However, the projections and the recesses are relatively small in size, and particularly the projections formed on the outer ring do not have a sufficient strength, and therefore there are fears that the projections may undergo breakage, damage (bending), etc. Furthermore, it is necessary to form the recesses in the housing side, and the engine body requires additional processing and a design change, and this may increase the production cost.

SUMMARY OF THE INVENTION

It is an object of this invention to provide a roller bearing in which a small-diameter design (small-size design) can be achieved by omitting the use of an inner ring, and also an outer ring can be positioned in an axial direction without providing special fixing means, and can be prevented from axial movement relative to a housing, and further provide a method of manufacturing an outer ring of the roller bearing.

The above object has been achieved by a roller bearing according to the present invention for supporting a rotation shaft disposed in a housing of an engine, the roller bearing comprising:

a cylindrical outer ring that includes a raceway surface formed on an inner peripheral surface thereof and is disposed around the rotation shaft;
a plurality of rollers rollably disposed between the raceway surface of the outer ring and a raceway surface formed on an outer peripheral surface of the rotation shaft; and
an annular cage that holds the plurality of rollers at predetermined intervals in a circumferential direction,

wherein the outer ring includes axial opposite end portions and a smaller-diameter portion that is disposed axially between the axial opposite end portions, is smaller in diameter than outer peripheral surfaces of the axial opposite end portions and has a predetermined width in an axial direction, and
wherein an outer peripheral surface of the small-diameter is retained by an outer ring fixing member fixed to the housing so that the outer ring is positioned in the axial direction and prevented from moving in the axial direction.

Thus, the raceway surfaces are formed respectively at the inner peripheral surface of the outer ring and the outer peripheral surface of the rotation shaft, and with this construction in which the use of an inner ring is omitted, a small-diameter design (small-size design) can be achieved. The smaller-diameter portion is formed at the axially-central portion of the drawn cup-shaped outer ring, and therefore the outer ring can be positioned in the axial direction without providing any other special fixing means than the housing-side outer ring fixing member (e.g. a cap member), and the movement of the outer ring relative to the housing in the axial direction can be prevented. Particularly, the housing (engine body) does not require any additional processing and any design change (for example, a knock pin and a pin receiving hole).

Incidentally, more specifically, "the housing of the engine" means a cylinder block or a cylinder head, and generally "the rotation shaft" means a camshaft or a crankshaft. Therefore, "the housing-side outer ring fixing member (fixed to the housing)" includes a pedestal formed integrally on the housing and provided for the placing of the roller bearing (more specifically the outer ring) thereon, and a cap member fastened and fixed to the pedestal to clamp the roller bearing (more specifically, the outer ring) therebetween.

In the case of the crankshaft, the roller bearing can be applied to either of a crank journal and a crank pin. In the case of the camshaft, the roller bearing can be applied to an assembling-type camshaft having a detachable cam lobe. Therefore, the roller bearing may be of the type employing the split outer ring and the split cage (including a C-shaped split-type cage), in which case each of the outer ring and the cage is split in the circumferential direction) or may be of the type employing the one-piece outer ring and the one-piece cage, in which case each of the outer ring and the cage is not split in the circumferential direction.

Preferably, the outer ring is formed by pressing a metal sheet, and the outer peripheral surface and an inner peripheral surface of the outer ring are pressed radially inwardly into a step-like shape, and are radially inwardly bulged to form a step portion having an axis coinciding with an axis of the rotation shaft, the step portion defining the smaller-diameter portion.

More specifically, 3. an inner peripheral surface of the step portion serves as the raceway surface of the outer ring, and a width of an outer peripheral surface of the step portion is substantially equal to a width of the outer ring fixing member fixed to said housing. With this arrangement, the inner peripheral surface of the step portion is precisely maintained as the raceway surface, and by fitting the housing-side outer ring fixing member (for example, the cap member) on the outer peripheral surface of the step portion, the outer ring can be accurately positioned in the axial direction, so that the accuracy of mounting of the outer ring is enhanced.

Preferably, the step portion is symmetrical with respect to a central plane of the outer ring disposed perpendicular to the axis of the outer ring, and distal ends of the axial opposite end portions of the outer ring are bent radially inwardly to form a pair of opposed annular ribs, and the cage and the rollers are disposed within a space formed by the step portion and the pair of ribs. With this arrangement, even when a thrust force acts on the rotation shaft (for example, the crankshaft), the outer ring, the cage and the rollers can be stably retained.

In this case, the above space which is relatively large can be stably secured when an overall width (W0) of the outer ring, a width (W1) of the cage, a width W2 of the raceway surface and the width (W3) of the outer peripheral surface of the step portion are so set as to satisfy the following relation:

$$W0 > W1 > W2 > W3$$

Therefore, when the rotation shaft is, for example, a camshaft or a crankshaft, and the outer ring as well as the cage can be split in the circumferential direction, the roller bearing of the invention can be suitably mounted on the rotation shaft. Namely, the outer ring as well as the cage is split into two sections (that is, halves), and the two sections are combined into a cylindrical shape. However, when the cage is made of a polymeric material (synthetic resin), the cage may be of the C-shaped split type in which case the cage is cut at a portion thereof in the circumferential direction to form a slit, and in this case the cage is elastically deformed to open or expand the slit, and in this condition the cage is detachably mounted on the rotation shaft through this expanded slit.

On the other hand, when the rotation shaft is an assembling-type camshaft having a detachable cam lobe, the outer ring as well as the cage may be of the one-piece type such that they can not be split in the circumferential direction. Namely, when the cam lobe is detached from a shaft body, the one-piece outer ring and the one-piece cage which can not be split in the circumferential direction can be mounted on the camshaft.

Preferably, the roller bearing of the above construction is produced by a method comprising:

a deep drawing step of deep drawing a metal sheet by pressing to form an outer ring-forming product of a closed-bottom tubular shape;
a step portion-forming step of radially inwardly pressing a predetermined portion of a peripheral wall of the closed-bottom tubular outer ring-forming product which has a predetermined width in an axial direction to thereby form the step portion bulged radially inwardly into a step-like shape and having an axis coinciding with an axis of the outer ring-forming product;
a first rib forming step of forming a through hole through that portion of a bottom wall of the outer ring-forming product (having the step portion formed threat) which includes the axis, so that the remaining portion of the bottom wall forms the rib at one end of the outer ring; and
a second rib forming step of bending a deep-draw flange portion (formed at the open end of the peripheral wall of the outer ring-forming product over the entire periphery thereof in the above deep drawing step) to form the rib at the other end of the outer ring.

Thus, the step portion is formed by pressing at the peripheral wall of the closed-bottom tubular outer ring-forming product formed by deep drawing (pressing), and thereafter the ribs are formed respectively at the bottom wall and the open end of the peripheral wall. Therefore, the outer ring of a small-diameter design (small-size design) having excellent dimensional accuracy can be produced. Accordingly, the accuracy of positioning of the outer ring in the axial direction can also be enhanced.

In the case of the one-piece outer ring, preferably, before the rib forming steps, there is effected a quenching step of applying a quenching treatment to the entire surface of the outer ring-forming product subjected to the step portion forming step, and further there is effected a cage and rollers receiving step of receiving the cage and the rollers within the outer ring-forming product. In the case of the split outer ring, after the rib forming steps, there is effected a quenching step of applying a quenching treatment to the entire surface of the outer ring-forming product, and further there is effected a splitting step of splitting the hardened outer ring-forming product into two sections (halves) in the circumferential direction by cutting or pressing.

BRIEF DESCRIPTION OF THE DRAWINGS

**[0018]** [0047]

Fig. 1 is an exploded perspective view showing one example of a crankshaft provided with a roller bearing of the present invention.
Fig. 2 is a front cross-sectional view of the roller bearing shown in Fig. 1.
Fig. 3 is a cross-sectional view taken along the line A-A of Fig. 2.
Fig. 4 is a flow chart showing a process for the production of an outer ring shown in Fig. 2.
Fig. 5 is an exploded perspective view showing one example of an assembling-type camshaft provided with a roller bearing of the invention.
Fig. 6 is a front cross-sectional view of the roller bearing shown in Fig. 5.
Fig. 7 is a cross-sectional view taken along the line B-B of Fig. 6.
Fig. 8 is a flow chart showing a process for the production of an outer ring shown in Fig. 6.

DETAILED DESCRIPTION OF PREFERRED EMBODIMENTS

(First Embodiment)

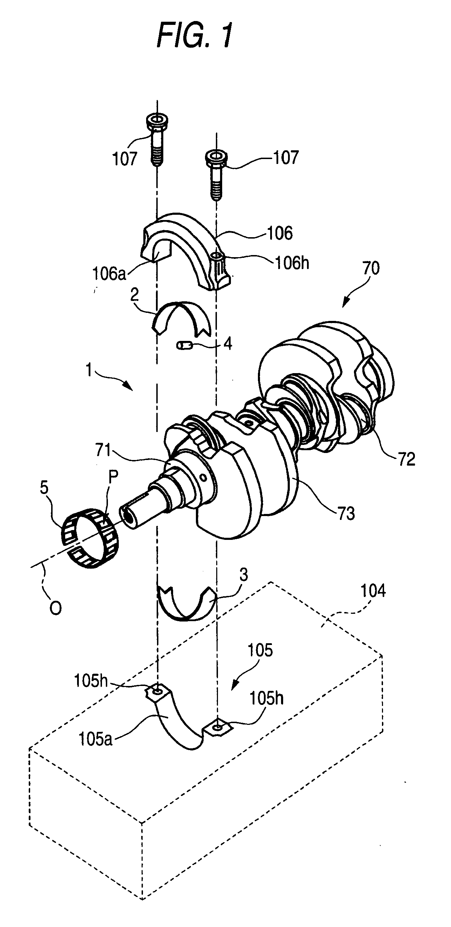

A preferred embodiment of the present invention will now be described with reference to the drawings. Fig. 1 is an exploded perspective view showing one example of a crankshaft provided with a roller bearing of the present invention. A crank journal 71 of the crankshaft (rotation shaft) 70 is placed on a pedestal (outer ring fixing member) 105 formed integrally on a cylinder block (housing) 104 of an engine. A cap member (outer ring fixing member) 106 opposed to the pedestal 105 is fastened and fixed to the pedestal 105 to clamp the needle roller bearing (hereinafter referred to merely as "roller bearing") 1 therebetween. Namely, the crankshaft 70 is supported on the cylinder block 104 by the roller bearing 1.

More specifically, a pair of internally-threaded holes 105h and 105h are formed in the pedestal 105, and a pair of passage holes 106h and 106h are formed in the cap member 106. A pair of bolts 107 and 107 are passed respectively through the passage holes 106h and 106h, and are threaded respectively into the internally-threaded holes 105h and 105h, thereby fixing the cap member 106 to the pedestal 105. The pedestal 105 has a recess portion 105a of a semi-cylindrical shape, while the cap member 106 has a recess portion 106a of a semi-cylindrical shape, and when the cap member 106 is fixed to the pedestal 105, with the two recess portions 105a and 106a combined together, the roller bearing 1 is retained within the combined two recess portions 105a and 106a. Namely, a pair of split-type outer ring members 2 and 3 jointly forming a split outer ring (hereinafter referred to merely as "outer ring) are fixed in an integral manner respectively to the cap member 106 and the pedestal 105, and the crank journal 71 (the crankshaft 70) serving as an inner ring is connected to the outer ring members 2 and 3 so as to rotate relative thereto. The crankshaft 70 includes a crank pin 72, a counter weight 73, etc.

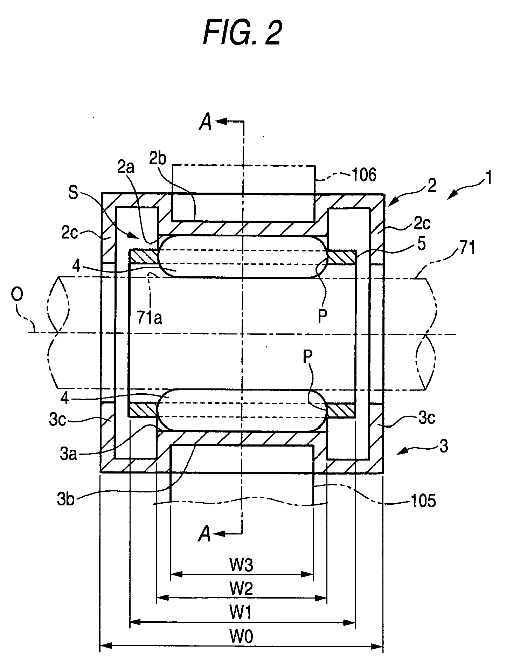

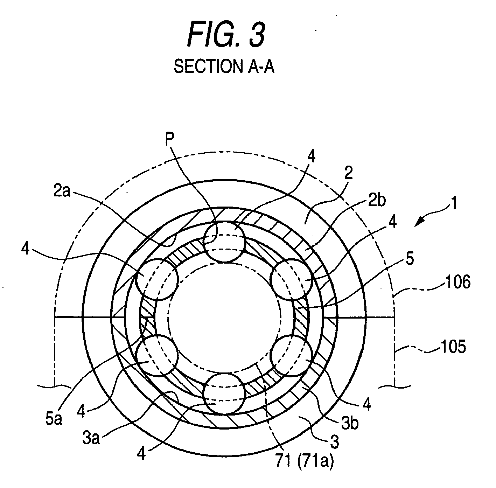

Fig. 2 is a front cross-sectional view of the roller bearing, and Fig. 3 is a cross-sectional view taken along the line A-A of Fig. 2. As shown in Figs. 2 and 3, the roller bearing 1 comprises the pair of outer ring members (outer ring) 2 and 3 made of steel, a plurality of (for example, 6) needle rollers (hereinafter referred to merely as "rollers") made of steel, and an annular C-shaped split-type cage (hereinafter referred to merely as "cage") 5 made of a synthetic resin. The overall outer ring is divided or split into two sections (that is, the two outer ring members 2 and 3) in the circumferential direction, and the two outer ring members 2 and 3 are combined together into a cylindrical shape to form the outer ring having an axis coinciding with an axis O of the crank journal 71. The rollers 4 are rollably disposed between an overall outer ring raceway surface (defined by raceway surfaces 2a and 3a formed respectively on inner peripheral surfaces of the outer ring members 2 and 3) and a journal raceway surface 71a formed on an outer peripheral surface of the crank journal 71. The cage 5 has pockets P formed therethrough and arranged at predetermined intervals (for example, at intervals of 60 degrees) in the circumferential direction, and the rollers 4 are received and held in the pockets P, respectively. The cage 5 is cut at a portion thereof in the circumferential direction to form a slit 5a. The cage 5 is elastically deformed to open or expand the slit 5a, and in this condition the cage 5 is detachably mounted on the crank journal 71 through this expanded slit 5a.

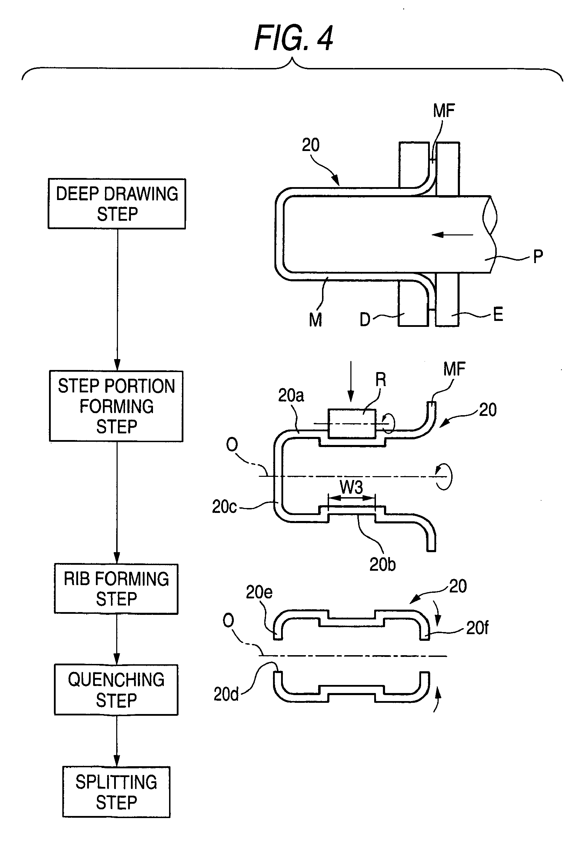

The outer ring (2 and 3) is formed by pressing a metal sheet into a drawn cup-shape (see Fig. 4). A step portion is formed at an outer peripheral portion of an axially-central portion of the outer ring, and is smaller in diameter than the outer peripheral surfaces of axial opposite end portions of the outer ring (2 and 3). More specifically, a pair of step portion sections 2b and 3b jointly forming the step portion are formed respectively in the outer peripheral surfaces of the two outer ring members 2 and 3, respectively. The step portion (2b and 3b) is continuously formed over the entire periphery of the outer ring (2 and 3), and has a predetermined width W3 over its entire periphery. More specifically, for forming the step portion (2b and 3b), the outer peripheral surface and inner peripheral surface of the outer ring (2 and 3) are pressed radially inwardly into a step-like shape (see Fig. 4), and therefore are radially inwardly bulged to form the step portion (2b and 3b) having an axis coinciding with the axis O.

The cap member 106 and the pedestal 105 of the cylinder block 104 retain the outer peripheral surfaces of the step portion sections 2b and 3b, thereby positioning the outer ring (2 and 3) in the axial direction and also preventing the axial movement of the outer ring (2 and 3).

More specifically, the inner peripheral surfaces of the step portion sections 2b and 3b are formed into the outer ring raceway surfaces 2a and 3a, respectively, and the width W3 of the outer peripheral surface of the step portion section 2b, 3b is equal to a width of the cap member 6 and a width of the pedestal 105. Therefore, the inner peripheral surfaces of the step portion sections 2b and 3b are highly precisely maintained as the outer ring raceway surfaces 2a and 3a, respectively, and the cap member 106 and the pedestal 105 are fitted respectively on the outer peripheral surfaces of the step portion sections 2b and 3b, and therefore the outer ring (2 and 3) can be accurately positioned in the axial direction, and the mounting accuracy of the outer ring (2, 3) is enhanced.

Further, the step portion section 2b, 3b is bilaterally symmetrical with respect to a central plane of the outer ring (2 and 3) (which is disposed centrally of the width thereof) disposed perpendicular to the axis O. Further, the distal ends of the axial opposite end portions of each outer ring member 2, 3 are bent radially inwardly (toward the axis O) substantially perpendicularly to form a pair of opposed annular ribs 2c and 2c, 3c and 3c, respectively. With this construction, the cage 5 and the rollers 4 are disposed within a space S formed by the step portion sections 2b and 3b, the pair of ribs 2c and 2c and the pair of ribs 3c and 3c, and therefore even when a thrust force acts on the crank journal 71, the outer ring (2 and 3), the cage 5 and the rollers 4 can be retained in a stable manner.

As shown in Fig. 2, an overall width W0 of each outer ring member 2, 3, a width W1 of the cage 5, a width W2 of each outer ring raceway surface 2a, 3a and the width W3 of the outer peripheral surface of each step portion section 2b, 3b are so set as to satisfy the following relation:

$$W0 > W1 > W2 > W3$$

Therefore, the space S which is relatively large can be stably secured.

Next, a method of producing the outer ring (2 and 3) of the above construction will be briefly described with reference to Fig. 4.

(Deep Drawing Step)

A peripheral edge portion of a metal sheet M is firmly held or clamped between a die D and a wrinkle holder E, and in this condition the metal sheet M is pressed (deep drawn) by a punch P to provide an outer ring-forming product 20 of a closed-bottom tubular shape such that the peripheral edge portion of the deep drawn metal sheet M forms a deep-draw flange portion MF.

(Step Portion-Forming Step)

A predetermined portion of a peripheral wall 20a of the closed-bottom tubular outer ring-forming product 20 which has a width W3 in the axial direction is pressed radially inwardly by a roller R. As a result, a step portion 20b bulged radially inwardly into a step-like shape is formed at the peripheral wall 20a, and has an axis coinciding with an axis O of the outer ring-forming product 20.

(Rib Forming Step)

A through hole 20d is formed axially through a bottom wall 20c of the outer ring-forming product 20 having the step portion 20b formed at the outer peripheral wall 20a, and has an axis coinciding with the axis O. As a result, the remaining portion of the bottom wall 20c forms a rib 20e at one end of the outer ring-forming product 20. Also, the deep-draw flange portion MF, formed at the open end of the peripheral wall 20a of the outer ring-forming product 20 over the entire periphery thereof in the deep drawing step, is bent to extend radially inwardly to form a rib 20f at the other end of the outer ring-forming product 20.

(Quenching Step)
A quenching treatment is applied to an entire surface of the outer ring-forming product 20.

(Splitting Step)
After the quenching step, the outer ring-forming product 20 is split into two sections (i.e., halves) in the circumferential direction by a cutting operation employing a cutter.

Thus, the step portion 20b is formed by pressing at the peripheral wall 20a of the closed-bottom tubular outer ring-forming product 20 formed by deep drawing (pressing) the metal sheet M, and thereafter the ribs 20e and 20f are formed respectively at the bottom wall 20c and the open end of the peripheral wall 20a. As a result, the outer ring (2 and 3) of a small-diameter design (small-size design) having excellent dimensional accuracy can be produced. Accordingly, the accuracy of positioning of the outer ring (2 and 3) in the axial direction can also be enhanced.

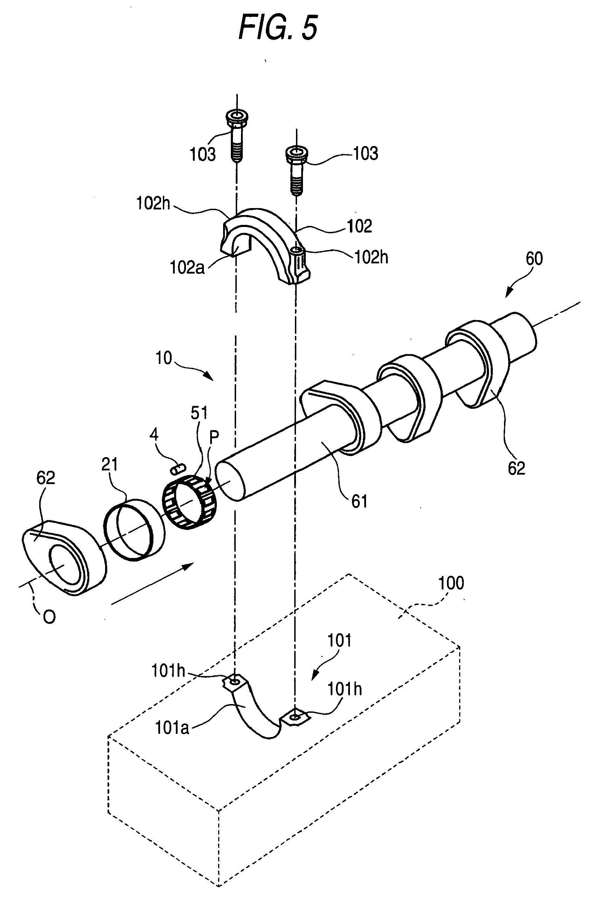

Fig. 5 is an exploded perspective view showing one example of an assembling-type camshaft provided with a roller bearing of the invention. The assembling-type camshaft (rotation shaft) 60 has a cam lobe 62 which is detachably mounted onto the camshaft 60 in a direction of an axis thereof, and therefore a one-piece outer ring 21 and an one-piece cage 51 which can not be split in a circumferential direction can be used in the needle roller bearing (hereinafter referred to merely as "roller bearing") 10 shown in Fig. 5.

A cam journal 61 of the assembling-type camshaft 60 is placed on a pedestal (outer ring fixing member) 101 formed integrally on a cylinder head (housing) 100 of an engine. A cap member (outer ring fixing member) 102 opposed to the pedestal 101 is fastened and fixed to the pedestal 101 to clamp the roller bearing 10 (which can be fitted onto the cam shaft 60 in the axial direction) therebetween. Namely, the assembling-type camshaft 60 is supported on the cylinder head 100 by the roller bearing 10.

More specifically, a pair of internally-threaded holes 101h and 101h are formed in the pedestal 101, and a pair of passage holes 102h and 102h are formed in the cap member 102. A pair of bolts 103 and 103 are passed respectively through the passage holes 102h and 102h, and are threaded respectively into the internally-threaded holes 101h and 101h, thereby fixing the cap member 102 to the pedestal 101. The pedestal 101 has a recess portion 101a of a semi-cylindrical shape, while the cap member 102 has a recess portion 102a of a semi-cylindrical shape, and when the cap member 102 is fixed to the pedestal 101, with the two recess portions 101a and 102a combined together, the roller bearing 10 is retained within the combined two recess portions 101a and 102a. Namely, the outer ring 21 is fixed in an integral manner to the pedestal 101 and the cap member 102, and the cam journal 61 (the assembling-type camshaft 60) serving as an inner ring is connected to the outer ring 21 so as to rotate relative thereto.

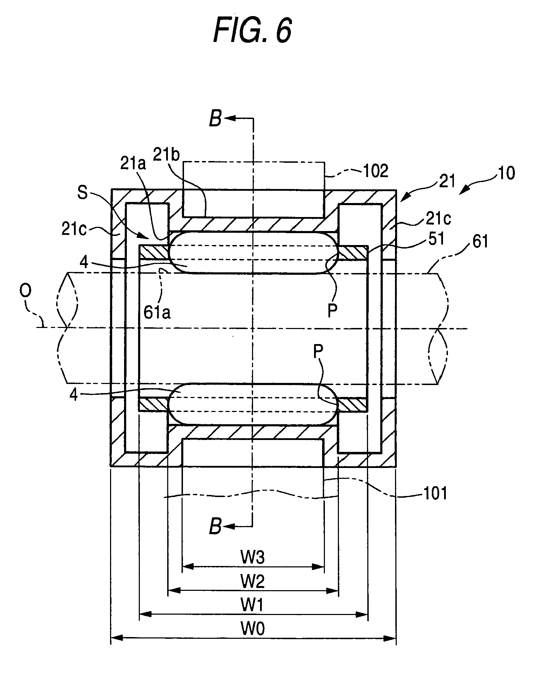

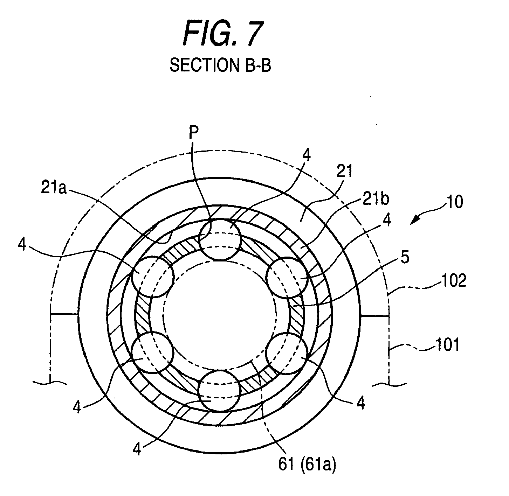

Fig. 6 is a front cross-sectional view of the roller bearing, and Fig. 7 is a cross-sectional view taken along the line B-B of Fig. 6. As shown in Figs. 6 and 7, the roller bearing 10 comprises the outer ring 21 made of steel, a plurality of (for example, 6) needle rollers (hereinafter referred to merely as "rollers") made of steel, and the annular cage (hereinafter referred to merely as "cage") 51 made of a synthetic resin. The outer ring 21 of this embodiment corresponds to one formed by combining the two split-type outer ring members 2 and 3 into a one-piece construction. Similarly, the cage 51 is a one-piece one corresponding to the C-shaped split-type cage 5. Thus, the roller bearing of this second embodiment (Figs. 6 and 7) is identical in basic structure to the roller bearing of the first embodiment (Figs. 1 and 2), and therefore detailed description thereof is omitted here.

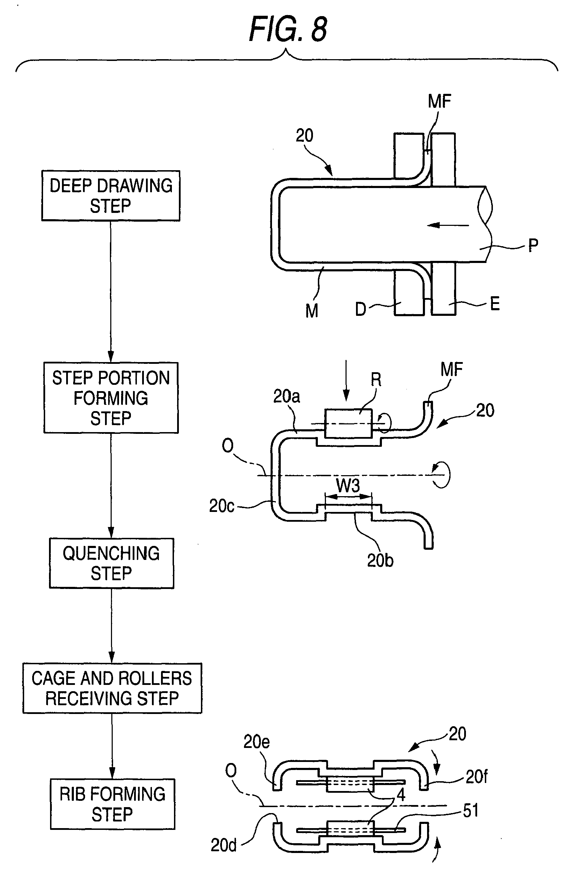

Next, a method of producing the outer ring 21 will be briefly described with reference to Fig. 8.

(Deep Drawing Step)

A peripheral edge portion of a metal sheet M is firmly held or clamped between a die D and a wrinkle holder E, and in this condition the metal sheet M is pressed (deep drawn) by a punch P to provide an outer ring-forming product 20 of a closed-bottom tubular shape such that the peripheral edge portion of the deep drawn metal sheet M forms a deep-draw flange portion MF.

(Step Portion-Forming Step)

A predetermined portion of a peripheral wall 20a of the closed-bottom tubular outer ring-forming product 20 of the closed-bottom tubular shape which has a width W3 in the axial direction is pressed radially inwardly by a roller R. As a result, a step portion 20b bulged radially inwardly into a step-like shape is formed at the peripheral wall 20a, and has an axis coinciding with an axis O of the outer ring-forming product 20.

(Quenching Step)
A quenching treatment is applied to an entire surface of the outer ring-forming product 20.

(Cage and Rollers Receiving Step)

Rollers 4 are held on a cage 51, and then the cage 51 holding the rollers 4 are received within the outer ring-forming product 20.

(Rib Forming Step)

A through hole 20d is formed axially through a bottom wall 20c of the outer ring-forming product 20 having the step portion 20b formed at the outer peripheral wall 20a, and has an axis coinciding with the axis O. As a result, the remaining portion of the bottom wall 20c forms a rib 20e at one end of the outer ring-forming product 20. Also, the deep-draw flange portion MF, formed at the open end of the peripheral wall 20a of the outer ring-forming product 20 over the entire periphery thereof in the deep drawing step, is bent to extend radially inwardly to form a rib 20f at the other end of the outer ring-forming product 20.

Thus, the step portion 20b is formed by pressing at the peripheral wall 20a of the closed-bottom tubular shape outer ring-forming product 20 formed by deep drawing (pressing) the metal sheet M, and thereafter the ribs 20e and 20f are formed respectively at the bottom wall 20c and the open end of the peripheral wall 20a. As a result, the outer ring 21 of a small-diameter design (small-size design) having excellent dimensional accuracy can be produced. Accordingly, the accuracy of positioning of the outer ring 21 in the axial direction can also be enhanced.

In the first embodiment, although the roller bearing 1 is used for the crank journal 71, the roller bearing 1 can be used for the crank pin 72. In the second embodiment, although the roller bearing 10 is used for the assembling-type camshaft 60, the roller bearing 1 of the first embodiment can be used for a camshaft having no detachable cam lobe 62.

**Claims**

1. A roller bearing for supporting a rotation shaft disposed in a housing of an engine, the roller bearing comprising:

   a cylindrical outer ring that includes a raceway surface formed on an inner peripheral surface thereof and is disposed around the rotation shaft;

a plurality of rollers rollably disposed between the raceway surface of the outer ring and a raceway surface formed on an outer peripheral surface of the rotation shaft; and
an annular cage that holds the plurality of rollers at predetermined intervals in a circumferential direction,

wherein the outer ring includes axial opposite end portions and a smaller-diameter portion that is disposed axially between the axial opposite end portions, is smaller in diameter than outer peripheral surfaces of the axial opposite end portions and has a predetermined width in an axial direction, and
wherein an outer peripheral surface of the small-diameter portion is retained by an outer ring fixing member fixed to the housing so that the outer ring is positioned in the axial direction and prevented from moving in the axial direction.

2. The roller bearing according to claim 1, wherein the outer ring is formed by pressing a metal sheet, and
the outer peripheral surface and an inner peripheral surface of the outer ring are pressed radially inwardly into a step-like shape, and are radially inwardly bulged to form a step portion having an axis coinciding with an axis of the rotation shaft, the step portion defining the smaller-diameter portion.

3. The roller bearing according to claim 2, wherein an inner peripheral surface of the step portion serves as the raceway surface of the outer ring, and
a width of an outer peripheral surface of the step portion is substantially equal to a width of the outer ring fixing member fixed to said housing.

4. The roller bearing according to claim 2, wherein the step portion is symmetrical with respect to a central plane of the outer ring disposed perpendicular to the axis of the outer ring,
distal ends of the axial opposite end portions of the outer ring are bent radially inwardly to form a pair of opposed annular ribs, and
the cage and the rollers are disposed within a space formed by the step portion and the pair of ribs.

5. A method of manufacturing an outer ring of a roller bearing, the method comprising:

deep drawing a metal sheet by pressing to form an outer ring-forming product having a closed-bottom tubular shape;
radially inwardly pressing a predetermined portion of a peripheral wall of the closed-bottom tubular outer ring-forming product which has a predetermined width in an axial direction to form a step portion bulged radially inwardly into a step-like shape and having an axis coinciding with an axis of the outer ring-forming product;
forming a through hole through a portion of a bottom wall of the outer ring-forming product, so that the remaining portion of the bottom wall forms a first rib at one end of the outer ring; and
bending an open end of a peripheral wall of the outer ring-forming product to form a second rib at the other end of the outer ring.

# FIG. 1

## FIG. 2

# FIG. 3

## SECTION A-A

# FIG. 4

DEEP DRAWING
STEP

STEP PORTION
FORMING
STEP

RIB FORMING
STEP

QUENCHING
STEP

SPLITTING
STEP

# FIG. 5

# FIG. 6

# *FIG. 7*

## SECTION B-B

## FIG. 8

DEEP DRAWING
STEP

↓

STEP PORTION
FORMING
STEP

↓

QUENCHING
STEP

↓

CAGE AND ROLLERS
RECEIVING STEP

↓

RIB FORMING
STEP

**European Patent Office**

## EUROPEAN SEARCH REPORT

Application Number

EP 08 00 4960

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | DE 29 08 782 A1 (STIHL MASCHF ANDREAS) 18 September 1980 (1980-09-18) | 1,3 | INV. F16C19/46 F16C33/58 F16C33/60 F16C33/64 |
| Y | * page 5, paragraph 3 * <br> * page 6, paragraph 6 - page 7, paragraph 1 * <br> * figure 1 * | 2,4 | |
| | ----- | | |
| X | DE 33 21 757 A1 (SCHAEFFLER WAELZLAGER KG [DE]) 22 December 1983 (1983-12-22) | 5 | |
| Y | * claim 1 * <br> * figure 1 * | 2,4 | |
| | ----- | | |

TECHNICAL FIELDS SEARCHED (IPC)

F16C

The present search report has been drawn up for all claims

| Place of search | Date of completion of the search | Examiner |
|---|---|---|
| Munich | 30 June 2008 | Schlossarek, M |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 08 00 4960

This annex lists the patent family members relating to the patent documents cited in the above-mentioned European search report.
The members are as contained in the European Patent Office EDP file on
The European Patent Office is in no way liable for these particulars which are merely given for the purpose of information.

30-06-2008

| Patent document cited in search report | | Publication date | Patent family member(s) | | Publication date |
|---|---|---|---|---|---|
| DE 2908782 | A1 | 18-09-1980 | CA | 1136683 A1 | 30-11-1982 |
| | | | JP | 55126115 A | 29-09-1980 |
| | | | JP | 63027572 B | 03-06-1988 |
| DE 3321757 | A1 | 22-12-1983 | NONE | | |

For more details about this annex : see Official Journal of the European Patent Office, No. 12/82

**EP 1 972 803 A1**

**REFERENCES CITED IN THE DESCRIPTION**

**Patent documents cited in the description**

- JP 2005180459 A